(19) Europäisches Patentamt
European Patent Office
Office européen des brevets

(11) **EP 1 850 969 B1**

(12) **EUROPÄISCHE PATENTSCHRIFT**

(45) Veröffentlichungstag und Bekanntmachung des Hinweises auf die Patenterteilung:
**23.01.2013  Patentblatt 2013/04**

(21) Anmeldenummer: **06705846.1**

(22) Anmeldetag: **25.01.2006**

(51) Int Cl.:
*B05B 12/12* (2006.01)      *G01S 5/16* (2006.01)
*G01S 17/87* (2006.01)      *B05B 13/00* (2006.01)

(86) Internationale Anmeldenummer:
**PCT/DE2006/000110**

(87) Internationale Veröffentlichungsnummer:
**WO 2006/079321 (03.08.2006 Gazette 2006/31)**

(54) **VERFAHREN FÜR DEN POSITIONSABHÄNGIG GESTEUERTEN FARBAUFTRAG AUF FLÄCHEN**

METHOD FOR APPLYING PAINTS TO SURFACES IN A CONTROLLED, POSITION-DEPENDENT MANNER

PROCEDE D'APPLICATION DE PEINTURE SUR DES SURFACES, A REGULATION EN FONCTION DE LA POSITION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **25.01.2005   DE 102005003333**

(43) Veröffentlichungstag der Anmeldung:
**07.11.2007   Patentblatt 2007/45**

(73) Patentinhaber: **Büstgens, Burkhard**
**79194 Gundelfingen (DE)**

(72) Erfinder:
• **BÜSTGENS, Burkhard**
**79194 Gundelfingen (DE)**
• **GEORGES, Suheel, Roland**
**79102 Freiburg (DE)**

(56) Entgegenhaltungen:
**WO-A-2004/015980      US-A1- 2005 100 680**

**Beschreibung**

Die Erfindung betrifft das technische Gebiet des Farbauftrages auf Flächen, insbesondere der dekorativen Farbgestaltung großer Flächen, insbesondere von Flächen des Hoch-, Tief- und Ingenieurbaus nach einer Bildvorlage. Diese können beispielsweise Innen- und Außenwände, Decken oder Böden von Wohn- und Nutzgebäuden sein, aber auch beispielsweise die Betonflächen von Brücken-, Tunnel- oder Straßenbauwerken oder Mauern für den Schallschutz, Sichtschutz oder für Befestigungen und artverwandte Flächen sein.

Die genannten Farbgestaltungen werden heute fast ausnahmslos von Künstlerhand vorgenommen und stellen somit keine 1:1 Reproduktion der Bildvorlage dar. Technische Lösungen sind zum einen modifizierte Drukker: In FR 2601265 oder in WO 0048841 werden Vorschubmechanismen an die Fläche montiert und der Druckkopf zeilenweise über die Fläche geführt. Die Geräte besitzen dadurch den Nachteil, dass nur ein vollkommen frei zugängliches Stück einer Fläche bedruckt werden kann. In DE 19525528 wird deshalb ein Drucksystem vorgestellt, das an einem Manipulatorarm befestigt ist und nach einer programmierten Route über die Druckfläche bewegt wird. Dadurch können bereits individuelle Flächenelemente in flexiblerer Weise bedruckt werden. Die Bedruckung einer beliebig ausgedehnten Fläche ist jedoch auch hier nicht einfach möglich. In US 2005/0100680 und in WO 03 066239 wird deshalb ein Farbauftragsystem vorgestellt, das Sensorsysteme verwendet, um die Position einer frei beweglichen, insbesondere manuell bewegten Farbauftragvorrichtung zu verfolgen und in Abhängigkeit der Position die Bildinformationen zu drucken. Hierfür werden in Ausführungsbeispielen Positionsmesssysteme behandelt, die geeignet sind, die Position auch im Falle von Unregelmäßigkeiten der Fläche zu bestimmen. Das System verfügt über ein Array aus Farbauftragelementen, das die Basis für einen ökonomischen Druckvorgang legt. Die Positionsmesssysteme verfügen über Referenzmarken, welche vor Beginn des Druckvorganges an die Objektfläche angebracht werden. Innerhalb dieser Schrift sollen Positionsmesssysteme, die der Messung des Farbauftraggerätes während des Farbauftrages dienen, als Echtzeit-Positionsmesssysteme bezeichnet werden. Es wird erwähnt, dass durch Anbringung vieler Referenzmarken eine hohe Abdeckung der Objektfläche erreicht werden kann, wodurch um Unregelmäßigkeiten der Fläche herum gedruckt werden kann. Mit einer zunehmenden Anzahl an Referenzmarken steigt jedoch der Aufwand, der mit dem Setzen der Referenzmarken und insbesondere mit der notwendigen Vermessung der Koordinaten der Referenzmarken einhergeht, was sehr zeitaufwändig ist und damit die ökonomischen Vorteile des Verfahren wieder zunichte machen. Im Falle von sehr großen Flächen ist dieser Zeitaufwand besonders groß.

Daher ist es Aufgabe der Erfindung, ein ökonomisches Verfahren für die Bestimmung der Positionen der Referenzmarken des Echtzeit-Positionsmesssystems zu schaffen.

Das erfindungsgemäße Verfahren löst diese Aufgabe, indem einzig von dem verwendeten Positionsmesssystem oder artgleichen Messsystemen selbst gebrauch gemacht wird. Es ist ein Verfahren zur Auftragung von Farben oder Lacken auf große Flächen mittels eines beweglichen, positionsabhängig gesteuerten Farbauftraggerätes, das zur Messung seiner Position den beweglichen Teil eines Echtzeit-Positionsmesssystem enthält, welches sich auf ortsfeste Referenzmarken stützt, dadurch gekennzeichnet, dass die Position zumindest einer Referenzmarke des Echtzeit-Positionsmesssystems mittels eines Positionsmessverfahrens bestimmt wird, das sich auf Positionen von Referenzmarken des Echtzeit-Positionsmesssystems stützt.

Die Bestimmung der Positionen der Referenzmarken durch ein Positionssystem, das sich ebenfalls auf die Referenzmarken stützt, welche zur Positionsmessung des Farbauftraggerätes verwendet werden, entbindet zum einen den Operator des Farbauftraggerätes von dem großen Arbeitsaufwand der manuellen Vermessung der Position der Referenzmarken. Zum anderen ermöglicht dieses Verfahren das Bestimmen von Markenposition mit derselben hohen Genauigkeit, die das für den Farbauftrag erforderliche hochgenaue Positionsmesssystem bietet Als Richtwert für die Genauigkeit sowohl des Positionsmesssystems als auch der Markenpositionen kann die Größenordnung des Abstandes der Bildpunkte zueinander, der Pitch, herangezogen werden, welcher weit unter einem Millimeter liegt. Eine solche Genauigkeit kann durch konventionelle Vermessungsmethoden beispielsweise auf großen Fassadenflächen heute nicht erreicht werden.

Grundsätzlich können mittels des Verfahrens beliebige Flächen freier Form und Größe im Raum bedruckt werden. Das Positionsmesssystem sei deshalb allgemein in der Lage, Koordinaten in drei Dimensionen zu bestimmen (Position und/oder Verdrehung). Demzufolge befinden sich die Referenzmarken ebenfalls frei im Raum, jedoch in fester Position zur Fläche. Nur aus Gründen der einfacheren Verständlichkeit soll in der folgenden Beschreibung der Erfindung und der Ausführungsbeispiele von ebenen (2-dimensional beschreibbaren) Flächen ausgegangen werden. Die für eine Bedruckung relevanten Koordinaten des Arbeitsgerätes sind dann die Position $(x,y)$ und der Verdrehwinkel $(phi)$ des Arbeitgerätes relativ zur Fläche. Das Koordinatensystem (Ursprung und Verdrehung) sei beliebig wählbar. Eine Übertragung auf dreidimensionale Flächen ist durch Anwendung bekannter mathematischer Zusammenhänge einfach möglich.

Beschreibung der Erfindung:

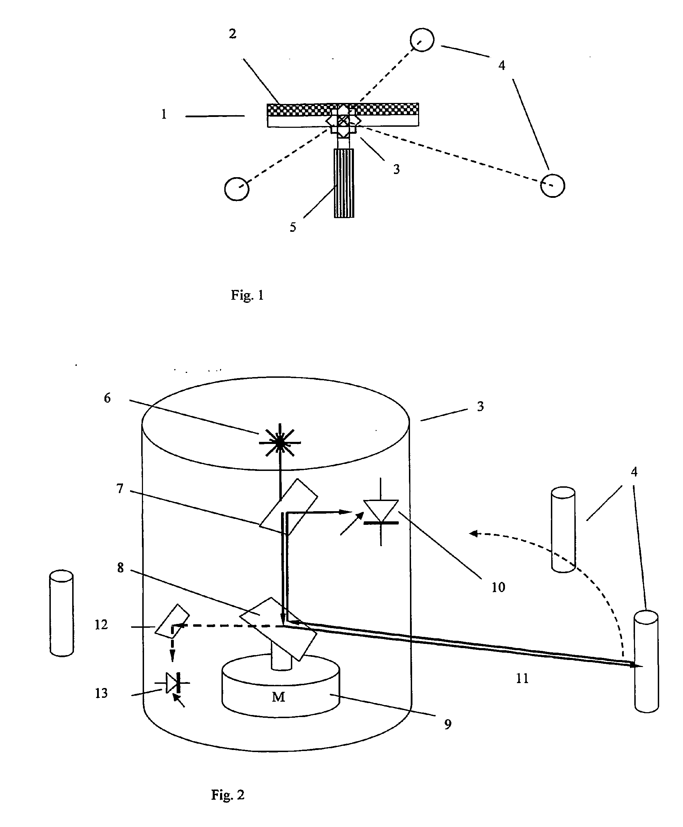

Fig. 1 stellt beispielhaft ein Farbauftraggerät der erfindungsgemäßen Gattung dar, welches Farbauftragelement 2 enthält. Dargestellt ist ein handgeführtes Arbeitsgerät, das eine sehr flexible Arbeitsweise auch an schlecht zugänglichen Stellen erlaubt. Das erfindungsgemäße Positionsmesssystem basiert auf einem beweglichen Teil 3 und unbeweglichen Referenzmarken 4. Die Positionsmessung beruht auf der Messung der Abstände und/oder der Winkellage des beweglichen Teils des Positionsmesssystems in Relation zu möglichst vielen fest angebrachten Referenzmarken bekannter Position. Das Messverfahren basiert physikalisch auf der linearen Ausbreitung von Wellen kurzer Wellenlänge, beispielsweise von Licht, IR (bzw. Wärmestrahlung) oder Ultraschall. Hierzu bietet der Stand der Technik technische Verfahren und Vorrichtungen zur berührungslosen Abstandsmessung oder Winkelmessung. Zur Erläuterung sollen die Messverfahren z.B. nach dem Entstehen des Messsignals kategorisiert werden: Im Inside-Out Verfahren wird die Position des beweglichen Teils des Messsystems aus Sicht desselben auf die Referenzmarken errechnet. Im Outside-In Verfahren umgekehrt. Das Messsignal kann beispielsweise durch eine Kamera erzeugt werden. Diese führt geometrisch eine Punktprojektion des Gesichtsfeldes der Kamera durch und erfasst einen bestimmten Raumwinkel. Innerhalb dieses Raumwinkels lassen sich identifizierten Punkte im Bild entsprechend ihrer Lage im Bild eindeutige Winkel zuordnen, welche Bedingungen für die Positionsbestimmung dieser Punkte im Raum liefern. Auf dem Arbeitsgerät montiert (Inside-Out-Verfahren), kann die Kamera Winkelinformationen zu sichtbaren, fix angebrachten Referenzmarken liefern, i.e. die Messinformation ist eine Winkellage. Diese weisen etwa einen starken Kontrast zur Umgebung auf, leuchten, oder sind Landmarken, d.h. kontrastreiche Merkmale der Umgebung (hier: Referenzmarke = Landmarke). Im Outside-In-Verfahren befinden sich die Kameras in den Referenzmarken, während das bewegliche Arbeitsgerät beispielsweise ein kontrastreiches Merkmal aufweist. Hier messen die Referenzmarken die Winkellage des Merkmals anhand der Position im Bild, sodass auch hier die Messgröße eine Winkellage ist.

Im Falle einer ebenen Fläche ist es vorteilhaft, wenn sich die Referenzmarken 4 und der bewegliche Teil des Positionsmesssystems 3 in einer Ebene parallel zur Fläche befinden. In diesem Fall genügt ein einzelner, rotierender Lichtstrahl, ausgehend von der beweglichen Einheit (Inside-Out) oder ausgehend jeweils von den Referenzmarken.

Als erfindungsgemäßes Positionsmesssystem ist in Fig. 2 ein laserbasiertes System mit einem Laserscanner auf dem beweglichen Teil des Positionsmesssystems 3 dargestellt. Das System arbeitet nach dem Inside-Out Messverfahren. Ein Laserstrahl 11 wird in der Laserquelle 6 erzeugt, durchläuft zunächst einen halbdurchlässigen Spiegel 7 und wird mittels eines durch eine rotierende Einheit, beispielsweise ein Scanner-Motor 9, angetriebenen Drehspiels 8 abgelenkt, sodass er einen Vollkreis in einer Ebene beschreibt. Die Referenzmarken 4 sind hier beispielsweise mit einer retro-reflektierenden Schicht versehen, welche bewirkt, dass ein auftreffender Laserstrahl wieder in die Richtung des Lichteinfalls zurückgeworfen wird. Somit wird der rotierende Laserstrahl 11 beim Auftreffen auf eine Referenzmarke 4 wieder zum Drehspiegel 8 zurückgeworfen und in seinem weiteren Verlauf durch den halbdurchlässigen Spiegel 7 zumindest teilweise auf den Fotoempfänger 10 umgelenkt. Im Verlaufe einer Umdrehung des Scanner-Motors 9 können somit die von den Referenzmarken ausgehenden Lichtreflexe durch den Fotoempfänger 10 registriert werden. Dreht der Scanner-Motor mit konstanter Drehgeschwindigkeit, so liefert die zeitliche Auswertung der gemessenen Reflexe ein direktes Maß für die Winkellage der Referenzmarken 4 zum beweglichen Teil des Positionsmesssystems 3. Zur Bestimmung der Winkelnulllage kann an fester Position beispielsweise über einen Spiegel 12 der kreuzende Laserstrahl 11 zu einer Referenz-Fotodiode 13 umgelenkt werden. Es sei darauf hingewiesen, dass ein Messsystem zur Messung von Winkellagen in vielerlei Varianten aufgebaut werden kann, beispielsweise durch Verwendung eines Inkrementalgebers zur Bestimmung der momentanen Winkellage des Laserstrahls oder durch Verwendung von aktiv sensitiven Marken (und eine Signalübertragung). Die Überstreichzeit des Laserstrahls 11 über einen Referenzmarke definierter Breite kann weiterhin optional für eine Abstandsschätzung zwischen den beweglichen Teil des Positionsmesssystems 3 und Referenzmarke 4 herangezogen werden.

Es sei angemerkt, dass im Rahmen der Erfindung nicht notwendigerweise das Echtzeit-Positionsmesssystem des Farbauftraggerätes zur Bestimmung der Markenpositionen herangezogen werden muss. Es kann für den Operator beispielsweise weniger anstrengend sein, ein separates, leichteres Positionsmesssystem, das aber ansonsten der Funktion des Echtzeit-Positionsmessgerätes des Farbauftraggerätes entspricht, zu verwenden.

Das hierfür verwendete Positionsmessverfahren soll vielmehr dem im Farbauftraggerät intgegrierten Positionsmesssystem artverwandt bezüglich des Messverfahrens sein, worunter verstanden werden soll, dass es sich zur Bestimmung der eigenen Position ebenfalls auf Referenzmarken stützt, wobei diese an Punkten positioniert sind, an denen die Referenzmarken des Echtzeit-Positionsmesssystems positioniert werden. Ein besonders hervorzuhebender Sonderfall ist der Fall, dass sich das Positionsmesssystem für die Bestimmung der Position der Referenzmarken selbst auf ebendiese Referenzmarken stützt, die von dem Echtzeit-Positionsmesssystem des Farbauftraggerätes verwendet werden.

Im Folgenden soll ein detaillierter Arbeitsgang als Beispiel für die Anwendung des erfindungsgemäßen Verfahrens angegeben werden:

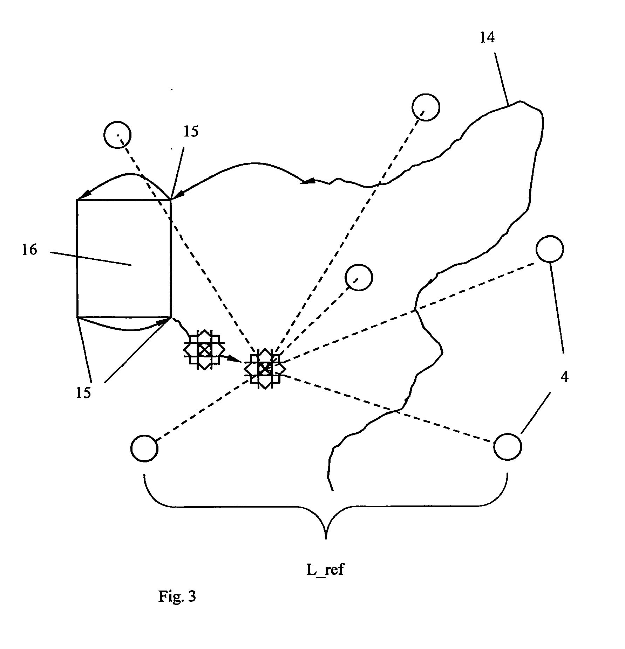

Im Allgemeinen ist die Geometrie einer zu bedruckenden Fläche nicht in ausreichender Genauigkeit bekannt. Das Arbeitsverfahren beginnt mit dem Anbringen von Referenzmarken an zur Fläche fester Position. In diesem Beispiel werden zuerst eine größere Anzahl von Referenzmarken über den gesamten Arbeitsbereich hinweg angebracht. Die Anbringung erfolgt beliebig mit Hinsicht auf die Position der einzelnen Referenzmarken, jedoch in der Weise, dass über die Fläche hinweg eine gleichmäßige Verteilung erreicht wird. Es folgt die Bestimmung der Koordinaten der Referenzmarken in - im Falle eines manuellen Arbeitsgerätes - halbautomatischer Weise. Hierzu wird das Arbeitsgerät mit der Fläche in Kontakt gebracht und über die Fläche auf einer Bahn 14 bewegt, siehe Fig. 3. Die Bewegung kann kontinuierlich oder diskontinuierlich erfolgen, oder es können einzelne Punkte explizit angefahren werden, etwa die Positionen von Flächenmerkmalen 15 wie Ecken und Kanten, in Fig. 3 am Beispiel eines Fensters 16 erläutert. Während dieses Vorgangs werden durch das Positionsmesssystem an einer Vielzahl von Punkten der Abstand und/oder die Winkellage zwischen dem beweglichen Teil des Positionsmesssystems und den Referenzmarken, die sich in Reichweite befinden, gemessen, digitalisiert und gespeichert. Für jeden Punkt stehen somit Messdaten zur Verfügung, die in einen Satz von Bestimmungsgleichungen für die Koordinaten des Punktes und einer jeden Referenzmarken eingesetzt werden. Eine einzelne Bestimmungsgleichung für eine Referenzmarke j an der Position i kann am Beispiel des Lasermesssystem nach Fig. 2 die folgende Form haben, ausgehend von einem gemessenen Winkel $\varphi_{ij}$:

$$\varphi_{i,j} - \varphi_{i,0} = \arctan 2 \ (y_i - y_j, x_i - x_j)$$

Dabei bezeichnet $\varphi_{i,0}$ die rotatorische Lage, $(x_i, y_i)$ die Koordinaten des Arbeitsgerätes an der Stelle $i$, und $(x_j, y_j)$ sind die Koordinaten einer Referenzmarke $j$.

Mithilfe der Gleichung lässt sich zeigen, dass erst ab einer Zahl von $j = 4$ erfassten Referenzmarken die Position dieser und des Arbeitsgerätes bestimmt werden kann. Hierfür sind mindestens $i = 8$ Positionen anzufahren, die Zahl der Gleichungen ist $i·j = 32$. Für die Lösung des nichtlinearen Gleichungssystems stehen heute vielfältige numerische Lösungsverfahren zur Verfügung, wie z.B. das Newton-Raphson Verfahren oder das Gaus-Newton Verfahren im Falle eines bestimmten Problems. Dieses ist dann gegeben, wenn die Zahl der zu lösenden Variablen exakt der Zahl der Gleichungen entspricht. Es ist sinnvoll, erheblich mehr Messungen für die Positionsberechnungen heranzuziehen, da hierdurch die Genauigkeit der berechneten Koordinaten steigt. Dies kann durch die Einbeziehung von weiteren, möglichst vielen Marken geschehen und/oder durch eine hohe Messfrequenz, also durch Messungen an möglichst vielen Punkten der Bahnkurve. Im letzteren Fall kann eine wahrhaft große Messdatenmenge erzeugt werden, sodass es sinnvoll ist, Filtertechniken wie Kalman-Filter oder sonstige Tracking-Algorithmen einzusetzen.

Die zur Bestimmung aller Referenzmarken-Positionen erforderliche Zahl der Messungen bzw. Gleichungen lässt sich verringern, indem einzelne Referenzmarken an bekannte Positionen gesetzt werden oder einzelne Beziehungen zwischen den Positionen der Referenzmarken als fest vorgegeben werden, etwa ein Abstand zwischen zwei Referenzmarken. Dies bedeutet, dass sich das Positionsmesssystem teilweise oder vollständig auf Marken bekannter Positionen stützen kann, um die Position einer vom Messsystem erfassten, aber noch in seiner Position unbestimmten Marke zu bestimmen. Sind ausreichend viele Referenzmarken in ihrer Position bestimmt, so kann die Position eines jeden Punktes der Fläche, der mit dem beweglichen Teil des Positionsmesssystems abgetastet werden kann, mithilfe desselben bestimmt werden. Somit kann an jedem mit dem beweglichen Teil des Positionsmesssystems abgetasteten Punkt der Fläche eine weitere Referenzmarke angebracht werden, der die Koordinaten des Punktes zugewiesen werden und somit eine höhere Abdeckung der Fläche mit Referenzmarken erreicht werden.

Positionsmesssysteme, die beispielsweise nur Winkel messen, benötigen eine oder mehrere Referenzlängen, um eindeutige Positionen zu errechnen. Dies können beispielsweise bekannte Abstände von Merkmalen der Fläche sein, welche nach dem Anbringen der Referenzmarken durch das Positionsmesssystem abgetastet werden. Sind jedoch Maße oder Abstände zwischen erfassten Merkmalen nicht bekannt, so kann anderweitig eine Referenzlänge definiert werden. Diese kann beispielsweise der Abstand zwischen mindestens zwei Referenzmarken sein, siehe L_ref in Fig. 3. Hierfür können einzelne Referenzmarken bereits in bekanntem, vorgegebenen Abstand zueinander gesetzt werden, z.B. mithilfe einer Abstandslehre, oder der Abstand zwischen mindestens zwei zuvor gesetzten Referenzmarken vermessen werden, beispielsweise durch einen Maßstab. Weiterhin kann durch die direkte Messung des Weges des Arbeitsgerätes zwischen zwei Punkten oder kontinuierlich, beispielsweise durch einen Inkrementalgeber oder durch Messung der Geschwindigkeit zusammen mit einer Zeitmessung, beim Abfahren einer Bahn auf der Fläche eine Referenzlänge erhalten werden. Auf diese Weise lassen sich beispielsweise mathematische Nebenbedingungen zu den oben beispielhaft gegebenen Bestimmungsgleichungen aufstellen, die implizit mit diesen gelöst werden. Die Lösungsvariante soll nicht ausschließen, dass beispielsweise eine fest vorgegebene Strecke bekannter Länge auf der Fläche durch das Arbeitsgerät zur Aufnahme von Positionsinformationen abgetastet wird.

An einer Stelle der Fläche, wo die Koordinaten der Referenzmarken bekannt sind und ein virtuelles Koordinatensystem vorliegt, kann eine Bedruckung durch die Farb-Applikationselemente entsprechend des Verfahrens wie in WO 03 066239 beschrieben durchgeführt werden. Angenommen wird dabei, dass eine Vorschrift, welche Koordinaten der Fläche einen Farbton zuordnet, vorliegt und diese für die Bedruckung angewendet wird. Die aktuellen Koordinaten des Arbeitsgerätes werden während des Farbauftrags kontinuierlich errechnet, beispielsweise mit den oben beschriebenen Algorithmen. Diese bieten ferner die Möglichkeit, die Genauigkeit der Koordinaten der Referenzmarken fortwährend zu prüfen und zu verbessern. Es kann vorkommen, dass an Punkten der Fläche nicht ausreichend viele Messdaten vorliegen, um die Position des Arbeitsgerätes zu berechnen. Ursache hierfür kann beispielsweise sein, dass in Bereichen der Fläche nicht ausreichend viele Referenzmarken innerhalb des Messbereiches des Positionsmesssystems liegen oder dass die freie Sichtverbindung zwischen einzelnen Referenzmarken und dem Arbeitsgerät unterbrochen ist. In diesem Fall können nachträglich Referenzmarken angebracht werden und das erfindungsgemäße Verfahren erneut durchgeführt werden, bis die Koordinaten der neuen Referenzmarken bestimmt sind.

Sind einzelne Referenzmarken direkt oder nahe an der Fläche angebracht, so können diese das Arbeitsgerät behindern, wenn an der Umgebung dieser Referenzmarken Farbe aufgetragen werden soll. Hierfür bietet sich an, die Referenzmarken grundsätzlich über eine lösbare Kupplung oder ein Fitting zu befestigen und diese zeitweilig dann zu entfernen, wenn das Arbeitsgerät diesen genähert wird. In diesem Falle muss gewährleistet sein, dass genügend viele andere Referenzmarken für die Positionsbestimmung in Reichweite des Arbeitsgerätes sind.

Nach dem anfänglichen Befestigen der Referenzmarken wird also das Koordinatensystem definiert, indem die Koordinaten der Marken bestimmt werden. Hierfür ist es nicht unbedingt erforderlich, dass das gesamte Arbeitsgerät über Punkte der Fläche bewegt wird, sondern es können auch Teile davon, welche jedoch zwingend den beweglichen Teil des Positionsmesssystems enthalten verwendet werden. Ebenso ist für diesen Arbeitsschritt auch ein unabhängiges Gerät geeignet, das die wesentlichen Komponenten des beweglichen Teils des Positionsmesssystems enthalten.

Da die Referenzmarken in beliebiger Weise angebracht werden können, muss noch eine Beziehung zwischen dem durch die Referenzmarken gebildeten virtuellen Koordinatensystem und der Flächengeometrie, dargestellt durch Flächenmerkmale wie z.B. Kanten und Ecken hergestellt werden. Dies ist durch einfaches Abtasten dieser Punkte mithilfe des Arbeitsgerätes, bzw. des beweglichen Teils des Positionsmesssystems und Quittierung möglich. Selbstverständlich kann es ökonomisch für den Arbeitsgang sein, Referenzmarken selbst an diesen Flächenmerkmalen anzubringen. Dann müssen die Referenzmarken-Koordinaten und die des Flächenmerkmals einander zugeordnet werden.

**Patentansprüche**

1. Verfahren zum Auftragen von Farben oder Lacken auf große Flächen mittels eines beweglichen, positionsabhängig gesteuerten Farbauftraggeräts (1), das zur Messung seiner Position den beweglichen Teil (3) eines Echtzeit-Positionsmesssystems enthält, welches sich auf ortsfeste Referenzmarken (4) stützt, **dadurch gekennzeichnet, dass** die Position mindestens einer Referenzmarke (4) des Echtzeit-Positionsmesssystems unter Verwendung des Echtzeit-Positionsmesssystems oder eines weiteren Positionsmesssystems, das sich auf die Referenzmarken (4) stützt, bestimmt wird,

   • indem eine Anzahl von Referenzmarken (4) in fester Lage zu der Fläche angebracht wird und der bewegliche Teil (3) des Echtzeit- Positionsmesssystems oder der bewegliche Teil eines weiteren Positionsmesssystems, dass sich auf die Referenzmarken (4) stützt, an mehreren Punkten der Fläche positioniert und mit Hilfe des Positionsmesssystems für die einzelnen Punkte jeweils die Abstände und/oder Winkellagen zwischen dem beweglichen Teil des Positionsmesssystems und den Referenzmarken (4) gemessen werden, und daraus die Position der mindestens einen Referenzmarke bestimmt wird,
   • und/oder indem mittels des Echtzeit-Positionsmesssystems oder des weiteren Positionsmesssystems die Position eines Punkts der Fläche bestimmt wird, indem es sich auf Marken bekannter Position stützt, an dieser Position eine Referenzmarke (4) angebracht wird und die gemessene Position der Referenzmarke (4) zugeordnet wird.

2. Verfahren nach Anspruch 1, **dadurch gekennzeichnet, dass** die Position von zumindest zwei Referenzmarken (4), auf die sich das Echtzeit-Positionsmesssystem oder das weitere Positionsmesssystem bezieht, bekannt sind.

3. Verfahren nach Anspruch 1 oder 2, **dadurch gekennzeichnet, dass** die Referenzmarken (4) derart angebracht werden, dass der Abstand (Lref) zwischen zwei Referenzmarken (4) einem vorgegeben Wert entspricht.

4. Verfahren nach einem der Ansprüche 1 bis 3, **dadurch gekennzeichnet, dass** die Referenzmarken (4) über eine lösbare Kupplung befestigt werden, und dass bei einer Annäherung des Farbauftraggeräts (1) an eine Referenzmarke (4) diese zeitweilig entfernt wird.

5. Verfahren nach einem der Ansprüche 1 bis 4, **da-**

**durch gekennzeichnet, dass** das im Echtzeit-Positionsmesssystem oder im weiteren Positionsmesssystem angewendete Positionsmessverfahren ein Inside-Out Verfahren ist.

6. Verfahren nach einem der Ansprüche 1 bis 6, **dadurch gekennzeichnet, dass** das im Echtzeit-Positionsmesssystem oder im weiteren Positionsmesssystem angewendete Positionsmessverfahren ein Outside-in Verfahren ist.

7. Verwendung eines Echtzeit-Positionsmesssystems, das eine rotierende Einheit enthält, welche Licht in Richtung der Referenzmarken (4) emittiert und/oder von den Referenzmarken (4) emittiertes Licht detektiert zur Durchführung des Verfahrens nach einem der Ansprüche 1 bis 5.

## Claims

1. A method for applying paints or varnishes to large surfaces by means of a displaceable paint applying tool (1), which is controlled in a position-dependent manner and which in order to measure its position contains the displaceable part (3) of a real-time position measuring system, which relies on positionally fix reference marks (4), **characterized in that** the position of at least one reference mark (4) of the real-time position measuring system is determined by employing the real-time position measuring system or another position measuring system that relies on the reference marks (4),

   -- by placing a number of reference marks (4) in fix position relative to the surface and by positioning the displaceable part (3) of the real-time position measuring system or the displaceable part of the other position measuring system that relies on reference marks (4) at several points on the surface, and by measuring for each of the individual points distance and/or angular position between the displaceable part of the position measuring system and reference marks (4) by means of the position measuring system, and by determining therefrom the position of the at least one reference mark,
   -- and/or by determining the position of a point of the surface by the real-time position measuring system or the other position measuring system, by placing a reference mark (4) at this position, relying on marks of known position, and by assigning the measured position to reference mark (4).

2. The method according to claim 1, **characterized in, that** the positions of at least two reference marks (4) on which the real-time position measuring system or the other position measuring system rely are known.

3. The method according to claim 1 or 2, **characterized in that** reference marks (4) are placed so that the distance (L_ref) between two reference marks (4) equals a pregiven value.

4. The method according claim 1 to 3, **characterized in that** the reference marks (4) are fastened via a releasable coupling, and that the coupling is removed temporarily when the paint applying tool (1) approaches a reference mark (4).

5. The method according claim 1 to 4, **characterized in that** the position measuring method applied in the real-time position measuring system or in the other position measuring system is an inside-out method.

6. The method according claim 1 to 5, **characterized in that** the position measuring method applied in the real-time position measuring system or in the other position measuring system is an outside-in method.

7. A use of a real-time position measuring system, which contains a rotating unit that emits light in the direction of reference marks (4) and/or detects light emitted by reference marks (4) for conducting the method according to claim 1 to 5

## Revendications

1. Procédé permettant d'appliquer des peintures ou des vernis sur des surfaces importantes au moyen d'un appareil d'application de peinture (1) mobile régulé en fonction de la position, qui contient, pour mesurer sa position, la partie mobile (3) d'un système de mesure de position en temps réel, qui se base sur des repères de référence (4) fixes, **caractérisé par le fait que** la position d'au moins un repère de référence (4) du système de mesure de position en temps réel est déterminée par l'utilisation d'un moyen du système de mesure de position en temps réel ou d'un autre système de mesure de position, qui se base sur les repères de référence (4),

   • un nombre de repères de référence (4) étant placé en position fixe par rapport à la surface et la partie mobile (3) du système de mesure de position en temps réel ou la partie (3) mobile d'un autre système de mesure de position, qui se base sur des repères de référence (4), étant positionnée à plusieurs points de la surface et les distances et/ou les positions d'angle entre la partie mobile du système de mesure de position et les repères de référence (4) étant mesurées à l'aide du système de mesure de position respectivement pour chaque point, et la position de l'au moins un repère de référence étant en déterminée,

• et/ou la position d'un point de la surface étant déterminée au moyen du système de mesure de position en temps réel ou de l'autre système de mesure de position, en se basant sur des repères de la position connue, un repère de référence (4) étant placé à cette position et la position mesurée étant associée au repère de référence (4).

2. Procédé selon la revendication 1, **caractérisé par le fait que** la position d'au moins deux repères de référence (4), auxquels se rapporte le système de mesure de position en temps réel ou l'autre système de mesure de position, est connue.

3. Procédé selon la revendication 1 ou 2, **caractérisé par le fait que** les repères de référence (4) sont placés de telle sorte que la distance (L_ref) entre deux repères de référence (4) correspond à une valeur prédéterminée.

4. Procédé selon l'une des revendications 1 à 3, **caractérisé par le fait que** les repères de référence (4) sont fixés par un accouplement amovible, et que celui-ci se retire temporairement lors de l'approchement de l'appareil d'application de peinture (1) à une repère de référence (4).

5. Procédé selon l'une des revendications 1 à 4, **caractérisé par le fait que** le procédé de mesure de position utilisé dans le système de mesure de position en temps réel ou dans l'autre système de mesure de position est un procédé intérieur-extérieur.

6. Procédé selon l'une des revendications 1 à 6, **caractérisé par le fait que** le procédé de mesure de position utilisé dans le système de mesure de position en temps réel ou dans l'autre système de mesure de position est un procédé extérieur-intérieur.

7. Utilisation d'un système de mesure de position, qui contient une unité rotative qui émet de la lumière en direction des repères de référence (4) et/ou détecte la lumière émise par les repères de référence (4) pour la mise en oeuvre du procédé selon l'une des revendications 1 à 5.

Fig. 1

Fig. 2

Fig. 3

**IN DER BESCHREIBUNG AUFGEFÜHRTE DOKUMENTE**

**In der Beschreibung aufgeführte Patentdokumente**

- FR 2601265
- WO 0048841 A
- DE 19525528
- US 20050100680 A
- WO 03066239 A